# EUROPEAN PATENT APPLICATION

(11) **EP 1 235 208 A2**
(43) Date of publication of application: **28.08.2002**
(21) Application number: 02003906.1
(22) Date of filing: 21.02.2002
(51) Int. Cl.: G11B 7/00, G11B 20/18

(54) **Optical disc drive**

(30) Priority: 21.02.2001 JP 2001045306
(71) Applicant: Mitsumi Electric Co., Ltd., Chofu-shi, Tokyo (JP)
(72) Inventor: Ohta, Hiroshi, Mitsumi Electric Co., Ltd., Atsugi-shi, Kanagawa (JP)
(74) Representative: Patentanwälte Dr. Solf & Zapf

(57) **Abstract**

An optical disc drive for at least reading out data from an optical disc is provided with a filter for eliminating at least low frequency components of a signal obtained from the optical disc, the filter having cutoff frequencies of plural levels; a switch for switching the cutoff frequency of the filter; and a programmed control for retrying reading out of data from a portion of a defect of the optical disc by changing the cutoff frequency of the filter when the data can not be properly read out from that portion of the optical disc under the current rotational speed level. Namely, when an optical disc having a defect such as scratches, dirt, dust, finger prints or the like is to be produced and thereby data can not be properly read from the portion of the defect, the cutoff frequency of the filter is raised by one level by the switch to retry of the reading out of the data from that portion. When the data can not be still read out from that portion, the rotation speed of the optical disc is lowered by one level to retry the reading out of the data. To determine as to whether the data can be read out or not, the number of C2 errors from that portion of the optical disc is counted.

## Description

### BACKGROUND OF THE INVENTION

### Field of the invention

The present invention relates to an optical disc drive.

### Description of the Prior Art

There are known optical disc drives for reading out data from a read-only optical disc such as a CD-ROM and the like, and optical disc drives for recording data onto and reading out data from a recordable optical disc such as a CD-R, a CD-RW and the like.

In general, such optical disc drives include a rotational driving mechanism for rotating a loaded optical disc, an optical pick-up (optical head) which is movable in a radial direction with respect to the loaded optical disc for emitting a laser beam to record and read out data to and from the optical disc, and an optical pick-up moving mechanism equipped with a sled motor for moving the optical pick-up in the radial direction.

The optical pick-up is composed from an optical pick-up body (optical pick-up base) equipped with a laser diode and a split photodiode, an objective lens supported on the optical pick-up body by means of suspension springs to enable movement of the lens in the optical axis direction (focus direction) as well as the radial direction with respect to the optical disc, a focusing actuator for moving the objective lens in the optical axis direction, and a tracking actuator for moving the objective leans in the radial direction.

In such optical disc drives, the optical pick-up is moved to a target track (target address), and at the target track, data is recorded (written) onto the optical disc and/or read out (reproduced) from the optical disc with focus control operation and tracking control operation being carried out.

In these optical disc drives, if there are defects such as scratches, dirt, dust or finger prints or the like on the recording surface of the optical disc, C2 errors will occur due to failure of reading out of data.

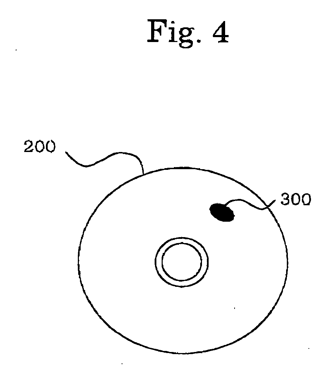

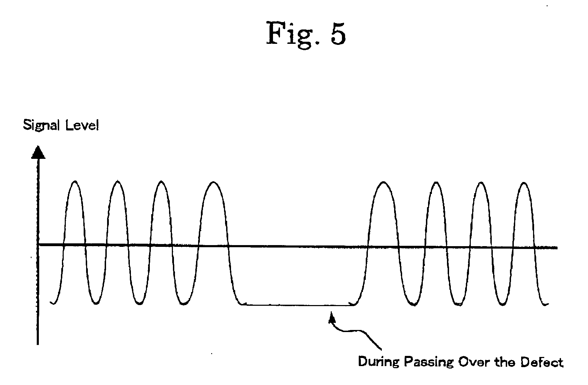

Fig. 4 shows one example of an optical disc having such a defect, and Fig. 5 shows a characteristic of a signal obtained from such an optical disc having the defect.

As shown in Fig. 4, if there is a defect 300 (a portion from which data can not be read out properly) on the recording surface of the optical disc 200, proper signal can not be obtained from the portion of the defect when the optical disc is reproduced, thus resulting in occurrence of C2 errors.

If such C2 errors occur over the predetermined error correction ability, it is not possible to reproduce the optical disc 200.

In such a case, the optical disc drive lowers the rotation speed of the optical disc and then retries to read out the data from the portion of the defect on the optical disc to reproduce the data.

However, lowering the rotational speed of the optical disc leads to a problem in that it takes a relatively long time to read out the data.

### SUMMARY OF THE INVENTION

It is therefore an object of the present invention to provide an optical disc drive capable of reading out data from a portion of a defect of an optical disc without lowering the rotation speed of the optical disc to so much extent.

In order to achieve the above object, the present invention is directed to an optical disc drive which can read out data from or record and read out data to and from an optical disc when the optical disc is loaded into the optical disc drive. The optical disc drive comprises a rotational driving mechanism for rotating the loaded optical disc at any one of multiple rotation speed levels; an optical pick-up for reading out data from or recording and reading out data to and from the optical disc; a filter for eliminating at least low frequency components of a signal obtained from the optical disc, said filter having cutoff frequencies of plural levels; switching means for switching the cutoff frequency; and means for retrying reading out of data from a portion of the optical disc when the data can not be properly read out from that portion of the optical disc under the current rotational speed level, said retrying means including first retry means for retrying reading out of the data from the portion of the optical disc after switching the cutoff frequency by the switching means.

In this invention, it is preferred that the retry by the first retry means is carried out when reading errors of the data occur more than a predetermined number under the current rotation speed level. As for the reading errors, the number of C2 errors are counted.

Further, in this invention, it is also preferred that the retry means further includes second retry means for retrying reading out of the data from the portion of the optical disc after lowering the rotation speed of the optical disc to a lower level thereof, the second retry means being operated when the data could not be properly read out from the portion of the optical disc by the retry of the reading out of the data by the first retry means.

In this case, it is preferred that the retry by the second retry means is carried out when reading errors of the data occur more than a predetermined number under the retry of the reading out of the data by the first retry means. As for the reading errors, the number of C2 errors are counted.

According to the optical disc drive of the present invention as described above, it is possible to read out data recorded at a portion of a defect of an optical disc (that is, a portion of an optical disc from which the data can not be read out properly) without lowering the rotation speed of the optical disc to so much extent. This makes it possible to shorten the time necessary for reading out the data from an optical disc having a defect.

Further, in the present invention, it is preferred that the filter is set to one of the cutoff frequencies of the plural levels in each of the rotation speed levels.

Furthermore, it is also preferred that the filter is a high pass filter.

Moreover, it is also preferred that the switching means is operated so as to raise the cutoff frequency.

These and other objects, structures and advantages of the present invention will be apparent from the following description of the preferred embodiment when it is considered taken in conjunction with the appended drawings.

### BRIEF DESCRIPTION OF THE DRAWINGS

Fig. 1 is a block diagram which generally shows a circuit configuration of a preferred embodiment of an optical disc drive according to the present invention.
Fig. 2 is a circuit diagram of the example of the structure of the filter of an optical disc drive according to the present invention.
Figs. 3A and 3B are a flow chart showing the operations carried out by a control means of the optical disc drive according to the present invention shown in Fig. 1.
Fig. 4 illustrates an example of an optical disc having a defect thereon.
Fig. 5 shows a waveform of a signal obtained over the portion of the defect of the optical disc.

### DETAILED DESCRIPTION OF THE PREFERRED EMBODIMENTS

With reference to the appended drawings, a detailed description of the preferred embodiment of an optical disc drive according to the present invention will be given below.

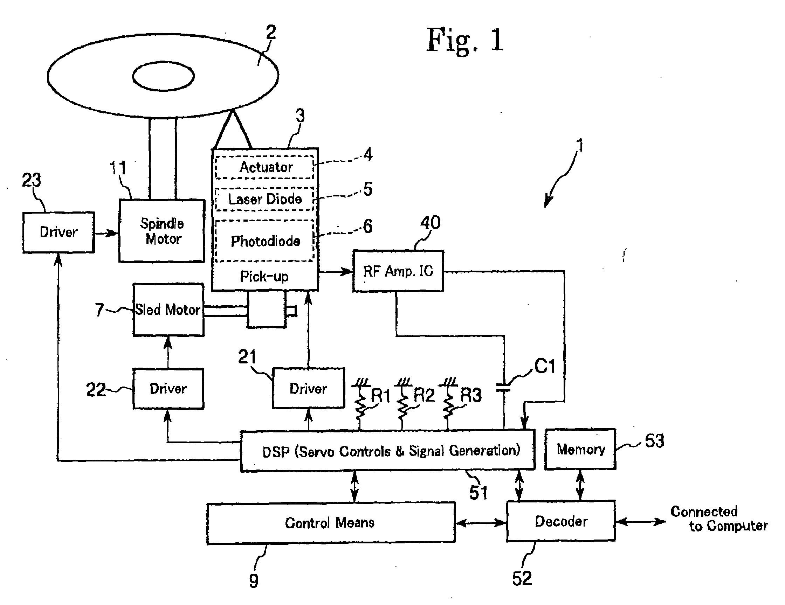

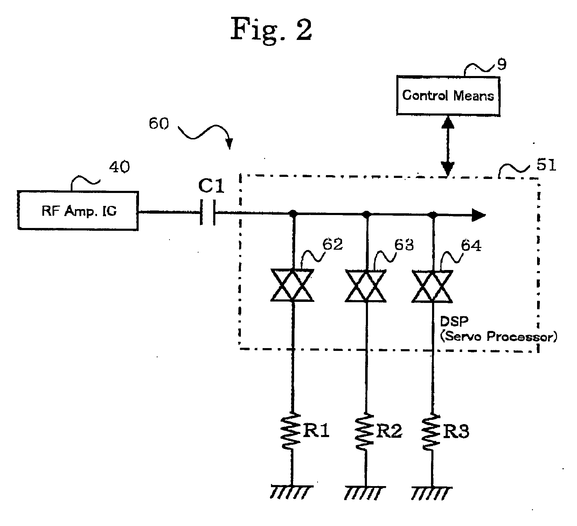

Fig. 1 is a block diagram which generally shows a circuit configuration of the preferred embodiment of the optical disc drive according to the present invention. Fig. 2 is a circuit diagram which shows an example of a filter of the optical disc drive according to the present invention.

In this embodiment shown in these drawings, the optical disc drive 1 is configured into a CD-ROM drive for reading out data from a read-only optical disc (CD-ROM) 2, but the preset invention is not limited thereto.

On one surface (signal recording surface) of the optical disc 2, a track is formed in a spiral manner.

The optical disc drive 1 includes a rotational driving mechanism for rotating the loaded optical disc 2 at a rotation speed which is one of multiple rotation speed levels. This rotational driving mechanism is mainly constructed from a spindle motor 11 for rotating an optical disc, a driver 23 for controlling the spindle motor 11, and a turntable which is fixed to the rotation shaft 12 of the spindle motor 11 for supporting the optical disc 2 thereon (not shown in the drawings).

Further, the optical disc drive 1 includes an optical pick-up (optical head) 3 which can move in the radial direction of the loaded optical disc 2; an optical pick-up moving mechanism for moving the optical pick-up 3 in the radial direction; a filter (high pass filter) 60 which eliminates low band frequency components of an HF signal described below (shown in Fig. 2); a control means 9; an RF amplifier IC 40; a servo processor (DSP) 51; a decoder 52 ; memories (e.g., RAM and the like) 53 ; and a casing (not shown in the drawings) for housing all of these elements. Hereinafter, the radial direction of the optical disc 2 loaded in the optical disc drive 1 will be referred to simply as "the radial direction".

The optical pick-up 3 includes an optical pick-up body (optical pick-up base) equipped with a laser diode (light source) 5 and a split photodiode (light-receiving portion) 6, and an objective lens (converging lens) not shown in the drawings.

The objective lens is supported by suspension springs (not shown in the drawings) provided on the optical pick-up body. Further, the objective lens is arranged so as to be movable with respect to the optical pick-up body in both the radial direction and the optical axis direction of the objective lens. In this way, when the objective lens is deviated away from its neutral position (center point), the restoring force of the suspension springs will bias the objective lens back toward the neutral position. Hereinafter, the direction of the optical axis of the objective lens will be referred to simply as the "optical axis direction, and the direction of the rotation axis of the optical disc 2 will be referred to simply as the "rotation axis direction".

Further, the optical pick-up 3 includes an actuator 4 for moving the objective lens with respect to the optical pick-up body. The actuator 4 includes a tracking actuator formoving the objective lens in the radial direction, and a focusing actuator for moving the objective lens in the optical axis direction (rotation axis direction) with respect to the optical pick-up body.

The tracking actuator and the focusing actuator of the actuator 4 are respectively driven by a driver 21.

As is common practice, the control means 9 is constructed from a microprocessor (CPU). The control means 9 carries out overall control of the optical disc drive 1. Namely, in addition to controlling elements such as the actuator 4 of the optical pick-up 3 and the laser diode 5, the control means 9 also controls elements such as the sled motor 7, the spindle motor 11, the RF amplifier IC 40, the servo processor 51, the decoder 52 and the memories 53, and the like.

The control means 9 also carries out the functions of switching the cutoff frequency of the high pass filter 60 to retry the reading out of the data from the optical disc when the data can not be properly read out from the optical disc upon reproduction of the optical disc 2.

In this invention, the optical disc drive 1 may be removably connected to an external device such as a computer via an interface control section (not shown in the drawings). In this way, communication can be carried out between the optical disc drive 1 and the external device.

This optical disc drive 1 is constructed so as to make it possible to set the data transmission rate, that is the rotation speed (rotation number) of the optical disc 2, at any one of the different rotation speeds of m-levels (where "m" is an integer equal to or greater than 2).

In this embodiment, the rotation speed of the optical disc 2 can be set at any one of the rotation speeds of nine levels. Namely, the rotation speed of the optical disc 2 can be set at any one of 1X speed (minimum speed / reference speed), 2X speed, 4X speed, 6X speed, 8X speed, 10X speed, 12X speed, 24X speed and 32X speed (maximum speed).

In this regard, each rotation speed described above is determined in multiples of the reference rotation speed (1X speed). Namely, 2X speed, 4X speed, 6X speed, 8X speed, 10X speed, 12X speed, 24X speed and 32X speed respectively refer to rotation speeds that are two times, four times, six times, eight times, ten times, twelve times, twenty-four times and thirty-two times of the reference rotation speed (1X speed).

The high pass filter 60 is provided for eliminating influence of noise of the HF signal (which will be described later in detail) inputted from the RF amplifier IC 40 to carry out filtering processing for the HF signal at each of the rotation speeds of the optical disc 2. The high pass filter 60 is composed of a capacitor C1, switches (switching means) 62, 63 and 64, resistor elements R1, R2 and R3.

The HF signal is applied to one end of the capacitor C1, and it is then supplied to the servo processor 51 through the other end of the capacitor C1.

One terminal of each of the switches 62, 63 and 64 is connected to the other end of the capacitor C1. The other terminals of these switches are respectively connected to the resistor elements R1, R2 and R3. By switching these switches 62, 63 and 64, different connecting states can be established between the capacitor C1 and the resistor elements R1, R2 and R3.

The cutoff frequency of the high pass filter 60 can be set at one of the plural connecting states by the combination of the capacitor C1 and any one or more of the resistor elements R1, R2 and R3.

Further, the optical disc drive may be constructed such that the cutoff frequency can be set at one of n levels (where n is an integer equal to or greater than 1) in each of the rotation speed levels of the optical disc 2.

In this embodiment, when the rotation speed of the optical disc 2 is set at 32X speed, the cutoff frequency can be set at α1 or α2 (α2 > α1), and when the rotation speed of the optical disc 2 is set at 24X speed, the cutoff frequency can be set at β1 or β2 (β1 > β2).

Further, although the switches 62, 63 and 64 are mounted in the servo processor 51 in this embodiment. the present invention is not limited thereto, and these switches 62, 63 and 64 may be arranged in other positions.

Furthermore, although the high pass filter 60 of this embodiment is composed of one capacitor and three resistor elements, the structure of the high pass filter is not limited to such structure if the cutoff frequency thereof can be set in plural levels.

Meanwhile, in optical discs, there are some optical discs having different frequency characteristics due to different design concepts or the like.

Therefore, when data is to be read out from an optical disc 2 by the optical disc drive 1, the cutoff frequency is set at the lowest frequency among the plural levels to broaden a band of frequencies that can pass through the high pass filter 60.

In this way, the optical disc drive 1 is capable of reading out data from an optical disc 2 irrespective of the frequency characteristic of the signal obtained from the optical disc 2.

Further, when data is to be read out from the optical disc 2 by this optical disc drive 1, the rotation speed of the optical disc 2 is set at the maximum rotation speed level. This makes it possible to read out the data from the optical disc 2 in the shortest time.

Next, the operations of the optical disc drive 1 will be described.

First, the optical disc drive 1 moves the optical pick-up 3 on a target track (target address). When the optical pick-up 3 reaches the target track, the optical disc drive 1 carries out various controls such as focus servo control, tracking servo control, sled servo control and rotation frequency control (rotation speed control) and the like. In this way, the optical disc drive 1 reads out (plays back / reproduces) the data (information) from the optical disc 2.

When the data is to be read out from the optical disc 2, the laser beam is emitted from the laser diode 5 of the optical pick-up 3 onto a predetermined track of the optical disc 2. This laser beam is reflected by the optical disc 2. Then, the laser beam reflected by the optical disc 2 is received by the split photodiode 6 of the optical pick-up 3.

A current is outputted in response to the amount of light received by the split photodiode 6. The current outputted from the split photodiode 6 is converted by an I-V amplifier (current-voltage conversion section; not shown in the drawings) into voltage, and then it is outputted from the optical pick-up 3.

The voltage (detection signal) outputted from the optical pick-up 3 is inputted into the RF amplifier IC 40. In the RF amplifier IC 40, an HF (RF) signal is generated by carrying out addition and amplification and other operations to the detection signal. This HF signal is an analog signal which corresponds to the pits and lands formed onto the optical disc 2.

The HF signal is inputted into the servo processor 51. In the servo processor 51, the inputted HF signal is digitized and then subjected to EFM (Eight to Fourteen Modulation) demodulation to obtain an EFM signal. The EFM signal is a pulse signal formed from pulses having either width (period) of 3T to 11T.

The EFM signal is decoded (converted) into a predetermined data format (DATA signal) by the servo processor 51, and it is then inputted into the decoder.

Then, after this data is decoded by the decoder 52 into data having a predetermined format for communication (transmission), such decoded data is transmitted to an external device such as a computer via an interface control section (not shown in the drawings).

Further, in the servo processor 51, error corrections (CIRC error correction) using an error correction code called as CIRC (Cross Interleaved Read Solomon Code) are carried out twice for the EFM signal.

The first CIRC correction is called as C1 error correction, and the second CIRC correction is called as C2 error correction.

The case where errors can not be corrected by the first CIRC correction that is C1 error correction is referred to as "C1 error", and the case where errors can not be corrected by the second CIRC correction that is C2 error correction is referred to as "C2 error".

In the servo processor 51, when a C2 error (reading error) is detected during the C2 error correction, C2 error signal is produced, and such C2 error signal is sent to the control means 9. In the control means 9, the number of the C2 errors is counted.

In these optical disc drives, if an optical disc has a defect (a portion from which data can not be properly read out) such as scratches, dirt, dust, finger prints and the like)on the signal recording surface thereof, reading out of the data from that portion of the optical disc 2 is likely to be failed and thereby C2 errors will occur due to failure of reading out of the data.

The C2 errors are liable to appear in the low frequency components of the HF signal conspicuously, and the number of C2 errors generated becomes large as the rotation speed of the optical disc 2 increases.

When C2 errors over the predetermined error correction ability of the optical disc drive 1 occur in an optical disc, it is not possible for the optical disc drive 1 to reproduce the optical disc 2.

Therefore, in this disc drive 1, when C2 errors more than a predetermined number (A times in this embodiment) occur in reading out the data from the portion of the defect of the optical disc 2, the cutoff frequency of the high pass filter 60 is switched (that is, raised) to eliminate the low frequency components of the HF signal, thereby reducing the occurrence of the C2 error.

Further, it is also possible to reduce the occurrence of the C2 error by lowering the rotation speed of the optical disc 2.

In this optical disc drive 1, when C2 errors more than the predetermined times A occur, the cutoff frequency of the high pass filter 60 is raised, to retry the reading out of the data from the optical disc 2.

Further, when C2 errors more than the predetermined times A still occur even though the cutoff frequency of the high pass filter 60 is raised under the state that the optical disc 2 is rotating at a predetermined rotation speed, the rotation speed of the optical disc 2 is lowered and then the reading out of the data from the optical disc 2 is retried.

In this way, it is possible to reduce the number of the C2 errors to the A times or less in reading out the data recorded in the portion of the defect of the optical disc 2, thereby enabling to read out the data.

Next, a description will be given for the tracking control, focusing control, sled control and rotation number control carried out by the optical disc drive 1 when reading out data from the optical disc 2.

As described above, the converted signal (voltage) that corresponds to the current outputted from the split photodiode 6 of the optical pick-up 3 is inputted into the RF amplifier IC 40.

Then, the RF amplifier IC 40 produces a tracking error (TE) signal (voltage) based on such received converted voltage signal.

This tracking error signal is a signal indicating the amount of deviation of the objective lens in the radial direction with respect to the center of the target track. Namely, the tracking error signal is a signal which indicates both the amount and the direction of the deviation of the objective lens in the radial direction with respect to the center of the target track.

The tracking error signal is inputted into the servo processor 51. In the servo processor 51, predetermined signal processing operations such as phase inversion, amplification and the like are carried out for the tracking error signal, thereby producing a tracking servo signal (voltage). Then, a predetermined driving voltage responsive to such tracking servo signal is applied to the actuator 4 via the driver 21. By driving the actuator 4, the objective lens is controlled so as to move toward the center of the track, Namely, a tracking servo operation is engaged based on the thus produced tracking servo signal.

Further, it should be mentioned that it is not possible to make the objective lens sufficiently follow the target track only by the actuation of the actuator 4. Accordingly, sled control is also carried out to make it possible for the objective lens to fully follow the target track. Namely, when the amount of the movement of the objective lens exceeds a predetermined number of tracks, the sled motor 7 is driven via the driver 22 to move the optical pick-up body 31 in the same direction as the direction of movement of the objective lens. Thus, by carrying out these controls, it becomes possible to return the objective lens to the neutral position (that is, a sled control is carried out).

Further, the RF amplifier IC 40 produces a focus error (FE) signal (voltage) based on the converted voltage signal that corresponds to the current outputted from the split photodiode 6.

This focus error signal is a signal indicating the amount of deviation of the objective lens in the optical axis direction (rotation axial direction) with respect to the focus point. Namely, the focus error signal is a signal which indicates both the amount and the direction of the deviation of the objective lens in the optical axis direction (rotation axial direction) with respect to the focus point.

The focus error signal is inputted into the servo processor 51. In the servo processor 51. predetermined signal processing operations such as phase inversion, amplification and the like are carried out for the focus error signal, thereby producing a focus servo signal (voltage). Then, a predetermined driving voltage in response to such focus servo signal is applied to the actuator 4 via the driver 21. By driving the actuator 4, the objective lens is controlled so as to move toward the focus point. Namely, a focus servo is engaged based on the thus produced focus servo signal.

Further, in the servo processor 51, a control signal (voltage) for controlling the rotation number (rotation speed) of the spindle motor 11, that is a signal for changing the rotation number (rotation speed) to a target value, is produced, and thus produced control signal is inputted into the driver 23.

In the driver 23, a driving signal (voltage) for driving the motor 11 is produced based on the control signal.

The driving signal outputted from the driver 23 is inputted into the spindle motor 11, and the spindle motor 11 is driven based on this driving signal so that a spindle servo is engaged to change the rotation number of the spindle motor 11 to the target value.

Next, a description will be given for the control operations carried out by the control means 9 when reading out data from an optical disc 2.

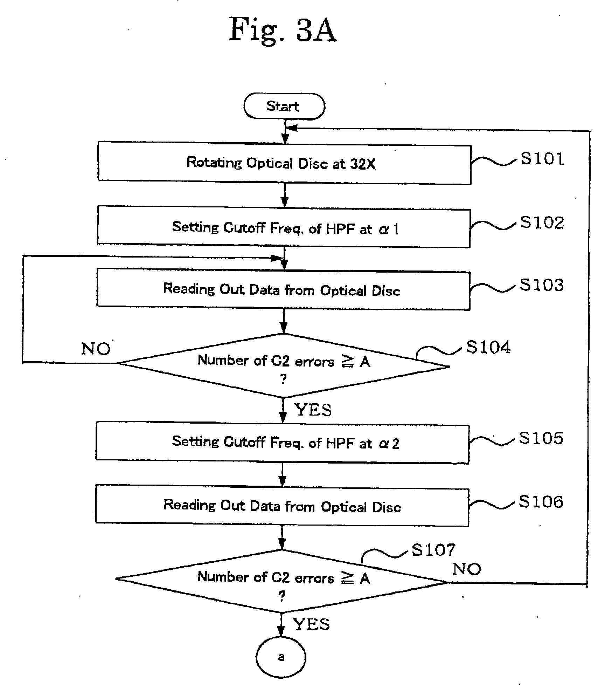

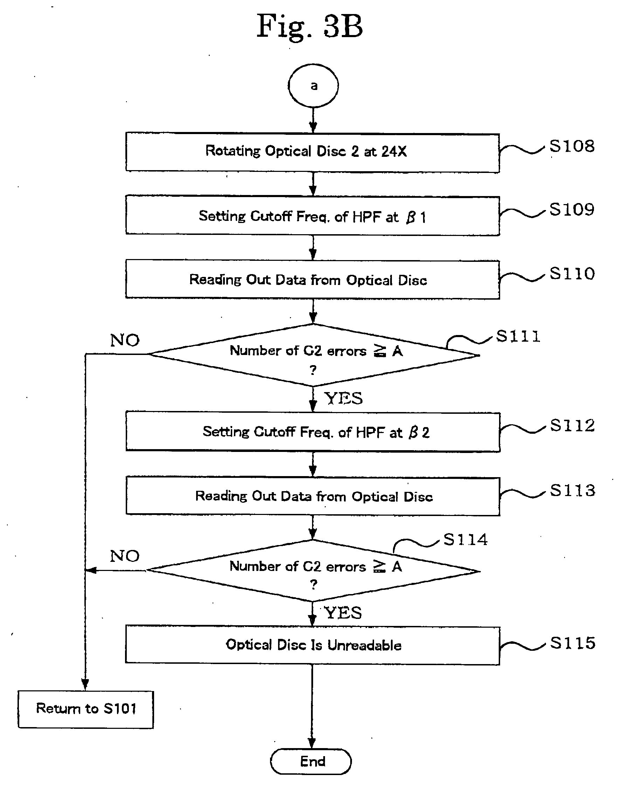

In this connection, Fig. 3A and 3B are a flow chart showing the control operations carried out by the control means 9 when the optical disc drive 1 reproduces the optical disc 2. Hereinbelow, a description will be given with reference to this flow chart.

First, the optical disc 2 is rotated at the rotation speed of 32X (maximum rotation speed) for reading out data from the optical disc 2.

Next, the cutoff frequency of the high pass filter 60 is set to α1 which is the lowest cutoff frequency when the optical disc is rotated at the rotation speed of 32X (Step 102).

Then, the reading out of the data from the optical disc 2 is started (Step 103). During the reading out of the data, the number of C2 errors is counted to determine as to whether the number of the C2 errors is equal to or greater than A (Step 104). When the number of the C2 errors is less than A, the reading out of the data from the optical disc 2 is continued at the rotation speed of 32X with the cutoff frequency of α1.

On the other hand, when the number of the C2 errors is equal to or greater than A at Step 104, the switches 62, 63 and 64 are switched to set the cutoff frequency to a2 (Step 105). Namely, the cutoff frequency of the high pass filter 60 is raised by one level.

Then, the reading out of the data from the optical disc 2 is retried (Step 106).

The retry of the reading out of the data is being carried out before a portion of the optical disc 2 from Which the data could not be properly read out (that is, a portion of the optical disc 2 from which C2 errors occurred more than A times) until passing through that portion.

Then, the number of the C2 errors is counted to determine as to whether the number of the C2 errors is equal to or greater than A (Step 107). When the number of the C2 errors is less than A, the program returns to Step 101 and the steps following Step 101 are executed again.

Namely, the program returns to the previous state of the rotation speed of 32X and the cutoff frequency of α1, and then the reading out of the data is continued.

When the number of the C2 errors in Step 107 is equal to or greater than A, the rotation speed of the optical disc 2 is changed to the rotation speed of 24X (Step 108). That is, the rotation speed is lowered to one lower level.

Next, the cutoff frequency of the high pass filter 60 is set to β1 which is the lowest frequency which can be set at the rotation speed of 24X (Step 109).

Then the reading out of the data from the optical disc 2 is retried (Step 110). During the retry of the reading out of the data, determination is made as to whether the number of C2 errors is equal to or greater than A (Step 111). When the number of the C2 errors is less than A, the program returns to Step 101 and the steps following Step 101 are executed again.

On the other hand, when the number of the C2 errors is equal to or greater than A, the cutoff frequency of the high pass filter 60 is set to β2 (Step 112).

Next, the reading out of the data from the optical disc 2 is retried (Step 113) to determine as to whether the number of C2 errors is equal to or greater than A (Step 114). When the number of the C2 errors is less than A, the program returns to the Step 101 and the steps following the Step 101 are executed again.

When the number of the C2 errors is equal to or greater than A at Step 114, it is determined that the optical disc 2 is unreadable one, and then the program is ended.

On the other hand, if the data recorded in the portion of the defect of the optical disc can be read out before Step 115, the reading out of the data from the optical disc 2 is continued, and when the reading out of the data from the optical disc 2 is completed, this program is ended.

As described above, according to the optical disc drive 1, it is possible to read out the data recorded in the portion of the defect of the optical disc 2 by switching the cutoff frequency of the high-pass filter 60.

Further, if the data of the optical disc 2 can be read out by switching the cutoff frequency of the high-pass filter 60 or lowering the rotation speed of the optical disc 2 and then retrying the read out of the data from the portion of the defect of the optical disc 2, the cutoff frequency of the filter 60 and the rotation speed of the optical disc 2 are returned to the previous states.

Namely, in this embodiment, the cutoff frequency of the filter 60 is switched and/or the rotation speed of the optical disc 2 is lowered only when data recorded at the portion of the defect of the optical disc (that is, a portion of the optical disc from which data can not be read out properly) is to be read, and data recorded other portions of the optical disc 2 can be read out at the maximum rotation speed.

According to the above operation, it is possible to shorten the time required for reading out the data from the optical disc 2 having such defect.

In the embodiment described above, the rotation speed of the optical disc 2 is changed between the two rotation speed levels. However, it goes without saying that the rotation speed may be changed among three or more levels.

Further, in the embodiment described above, the cutoff frequency of the high pass filter 60 is switched between the two levels in each of the respective rotation speed levels. However, it also goes without saying that the cutoff frequency may be changed among three or more levels.

In this regard, it should be understood that in the present invention, it is sufficient that the cutoff frequency can be changed between two or more levels in at least one rotation speed level in the multiple speed levels.

Moreover, in the present invention, it is sufficient if the rotation speed of the optical disc can be set at least between two levels.

Further, it should be noted that the optical disc drive according to the present invention is not limited to the CD-ROM drive. For example, it is possible to apply the present invention to various optical disc drives which can write data onto and read out data from a recordable optical disc (having a pre-groove) such as CD-R, CD-RW, DVD-R and DVD-RAM, or which can only read data from an optical disc such as CD (compact disc).

Further, the present invention may be applied to various optical disc drives which can write data onto and read out data from two or more types of optical discs.

Furthermore, it is also to be noted that the present invention is not limited to the embodiment described above, and the structures or components of the embodiment may be changed to other structures or components having the same functions.

As described above, according to the present invention, it is possible to read out data recorded at a portion of a defect of an optical disc (that is, a portion of an optical disc from which the data can not be read out properly) without lowering the rotation speed of the optical disc to so much extent. This makes it possible to shorten the time necessary for reading out the data from an optical disc having a defect.

Finally, it is to be understood that many changes and additions may be made to the embodiments described above without departing from the scope and spirit of the invention as defined in the appended Claims.

## Claims

1. An optical disc drive which can read out data from or record and read out data to and from an optical disc when the optical disc is loaded into the optical disc drive, the optical disc drive comprising:
a rotational driving mechanism for rotating the loaded optical disc at any one of multiple rotation speed levels;
an optical pick-up for reading out data from or recording and reading out data to and from the optical disc;
a filter for eliminating at least low frequency components of a signal obtained from the optical disc, said filter having cutoff frequencies of plural levels;
switching means for switching the cutoff frequency; and
means for retrying reading out of data from a portion of the optical disc when the data can not be properly read out from that portion of the optical disc under the current rotational speed level, said retrying means including first retry means for retrying reading out of the data from the portion of the optical disc after switching the cutoff frequency by the switching means.

2. The optical disc drive as claimed in claim 1, wherein the retry by the first retry means is carried out when reading errors of the data occur more than a predetermined number under the current rotation speed level.

3. The optical disc drive as claimed in claim 2, wherein the reading errors are C2 errors.

4. The optical disc drive as claimed in claim 1, wherein the retry means further includes second retry means for retrying reading out of the data from the portion of the optical disc after lowering the rotation speed of the optical disc to a lower level thereof, the second retry means being operated when the data could not be properly read out from the portion of the optical disc by the retry of the reading out of the data by the first retry means.

5. The optical disc drive as claimed in claim 4, wherein the retry by the second retry means is carried out when reading errors of the data occur more than a predetermined number under the retry of the reading out of the data by the first retry means.

6. The optical disc drive as claimed in claim 5, wherein reading errors are C2 errors.

7. The optical disc drive as claimed in claim 1, wherein the filter is set to one of the cutoff frequencies of the plural levels in each of the rotation speed levels.

8. The optical disc drive as claimed in claim 1, wherein the filter is a high-pass filter.

9. The optical disc drive as claimed in claim 1, wherein the switching means is operated so as to raise the cutoff frequency.
